# EUROPEAN PATENT APPLICATION

(11) **EP 4 806 968 A1**
(43) Date of publication of application: **16.09.2026**
(21) Application number: 24888820.8
(22) Date of filing: 08.11.2024
(51) Int. Cl.: C09J 7/38, C09J 7/24, C09J 107/00, C09J 153/00

(54) **ADHESIVE TAPE**

(30) Priority: 09.11.2023 JP 2023191747
(71) Applicant: Sekisui Chemical Co., Ltd., Osaka-shi, Osaka 530-8565 (JP)
(72) Inventor: NARIMATSU, Kiyoshirou, Hasuda-shi, Saitama 349-0198 (JP); TSUMURA, Kensuke, Hasuda-shi, Saitama 349-0198 (JP); HAYASHI, Kenta, Hasuda-shi, Saitama 349-0198 (JP); MEGURO, Mitsuyuki, Hasuda-shi, Saitama 349-0198 (JP); HIRAI, Daiki, Hasuda-shi, Saitama 349-0198 (JP)
(74) Representative: Ter Meer Steinmeister & Partner
(86) International application number: PCT/JP2024/039830
(87) International publication number: WO 2025/100529

(57) **Abstract**

The present invention relates to a pressure-sensitive adhesive tape having a pressure-sensitive adhesive layer comprising a natural rubber and a rubber component other than natural rubber, wherein the natural rubber has a molecular weight of 450,000 or more, the rubber component other than natural rubber is a block copolymer, and the pressure-sensitive adhesive layer is crosslinked with an isocyanate-based crosslinking agent. The present invention can provide a pressure-sensitive adhesive tape which has a pressure-sensitive adhesive layer comprising a natural rubber, and has excellent immediate processability and high holding power.

## Description

### Technical Field

The present invention relates to a pressure-sensitive adhesive tape having a pressure-sensitive adhesive layer comprising a natural rubber.

### Background Art

With the advent of pressure-sensitive adhesives comprising a natural rubber, they have dominated the pressure-sensitive adhesive market to this day, with use in almost every application, including packaging tapes, electrical insulation tapes, tapes for transporting electronic components, masking tapes, surface protection tapes, double-sided tapes, and medical tapes. This is because they exhibit excellent pressure-sensitive adhesion to various adherends and can be supplied at low cost. Further, from the viewpoint of reducing the environmental burden, demand for them has been increasing in recent years. As pressure-sensitive adhesive sheets having a pressure-sensitive adhesive layer composed of a pressure-sensitive adhesive comprising a natural rubber, for example, the pressure-sensitive adhesive sheets described in PTL1 to 3 are known as conventional art.

In the pressure-sensitive adhesive sheet described in PTL1, the pressure-sensitive adhesive in the pressure-sensitive adhesive layer contains a natural rubber, an isocyanate-based crosslinking agent, and a crosslinking adjustor. Thereby, the pressure-sensitive adhesive sheet described in PTL1 has excellent pressure-sensitive adhesive strength, holding properties at high temperature, and peelability for a variety of adherends.

In the pressure-sensitive adhesive sheet described in PTL2, the pressure-sensitive adhesive in the pressure-sensitive adhesive layer contains a rubber polymer and a natural rubber with a medium weight molecular weight of 100,000 to 400,000. Thereby, the pressure-sensitive adhesive sheet described in PTL2 has excellent rough surface adhesive strength at low temperature and adhesive strength at high temperature.

In the pressure-sensitive adhesive sheet described in PTL3, the pressure-sensitive adhesive in the pressure-sensitive adhesive layer is produced without solvent by heating and kneading raw materials containing a natural rubber, a tackifier, and an isocyanate-based crosslinking agent.

### Citation List

### Patent Literature

PTL1: JP 7072735 B
PTL2: JP 4557305 B
PTL3: JP 4651767 B

### Summary of Invention

### Technical Problem

However, regarding the pressure-sensitive adhesive sheets described in PTL1 and 3, since it takes time for the pressure-sensitive adhesive in the pressure-sensitive adhesive layer to be crosslinked, the pressure-sensitive adhesive sheet subjected to a cutting process soon after coating pressure-sensitive adhesive has caused protrusion of the pressure-sensitive adhesive from a side of the pressure-sensitive adhesive sheet in some cases. In other words, the pressure-sensitive adhesive sheets described in PTL1 and 3 have poor immediate processability. Further, the pressure-sensitive adhesive sheet described in PTL2 has insufficient holding power for use in packaging and office applications in some cases.

Therefore, an object of the present invention is to provide a pressure-sensitive adhesive tape which has a pressure-sensitive adhesive layer comprising a natural rubber, and has excellent immediate processability and high holding power.

### Solution to Problem

As a result of intensive research, the present inventors have found that the problem can be solved by a pressure-sensitive adhesive layer comprising a natural rubber having a high molecular weight in combination with a block copolymer, the layer being crosslinked with an isocyanate-based crosslinking agent, and have thus completed the present invention. The summary of the present invention is as follows.
[1] A pressure-sensitive adhesive tape having a pressure-sensitive adhesive layer comprising a natural rubber and a rubber component other than natural rubber, wherein
   the natural rubber has a molecular weight of 450,000 or more,
   the rubber component other than natural rubber is a block copolymer, and
   the pressure-sensitive adhesive layer is crosslinked with an isocyanate-based crosslinking agent.
[2] The pressure-sensitive adhesive tape according to the item [1], wherein the block copolymer comprises a styrene-isoprene-styrene block copolymer.
[3] The pressure-sensitive adhesive tape according to the item [1] or [2], wherein in the pressure-sensitive adhesive layer, a content of the block copolymer is 5 parts by mass or more and 1,000 parts by mass or less relative to 100 parts by mass of the natural rubber.
[4] The pressure-sensitive adhesive tape according to any one of the items [1] to [3], wherein the pressure-sensitive adhesive layer has a gel fraction of 10% or more.
[5] The pressure-sensitive adhesive tape according to any one of the items [1] to [4], wherein in the pressure-sensitive adhesive layer, an amount of a residual solvent is 10 ppm by mass or less.
[6] The pressure-sensitive adhesive tape according to any one of the items [1] to [5], further comprising a substrate provided on one surface of the pressure-sensitive adhesive layer,
   wherein the substrate is a paper substrate or an oriented polypropylene substrate.
[7] The pressure-sensitive adhesive tape according to any one of the items [1] to [6], having an SP pressure-sensitive adhesive strength of 4 N/24 mm or more.
[8] The pressure-sensitive adhesive tape according to any one of the items [1] to [7], having a ball tack value of 8 or more.
[9] The pressure-sensitive adhesive tape according to any one of the items [1] to [8],
   wherein the pressure-sensitive adhesive layer further comprises a tackifier resin, and
   the tackifier resin is a petroleum resin-based tackifier resin.

### Advantageous Effects of Invention

The present invention can provide a pressure-sensitive adhesive tape which has a pressure-sensitive adhesive layer comprising a natural rubber, and has excellent immediate processability and high holding power.

### Description of Embodiments

### [Pressure-sensitive adhesive tape]

The pressure-sensitive adhesive tape of the present invention is a pressure-sensitive adhesive tape having a pressure-sensitive adhesive layer comprising a natural rubber and a rubber component other than natural rubber, wherein the natural rubber has a molecular weight of 450,000 or more, the rubber component other than natural rubber is a block copolymer, and the pressure-sensitive adhesive layer is crosslinked with an isocyanate-based crosslinking agent. Thereby, the immediate processability of the pressure-sensitive adhesive tape can be enhanced and the holding power of the pressure-sensitive adhesive tape can be enhanced.

### (Pressure-sensitive adhesive layer)

The pressure-sensitive adhesive layer in the pressure-sensitive adhesive tape of the present invention comprises a natural rubber and a rubber component other than natural rubber. As described below, the pressure-sensitive adhesive layer is preferably formed of a pressure-sensitive adhesive comprising a natural rubber, a rubber component other than natural rubber, and other components that are appropriately blended on an as needed basis.

Since the pressure-sensitive adhesive layer contains a natural rubber, the pressure-sensitive adhesive tape can exhibit excellent pressure-sensitive adhesion to various adherends. Also, the pressure-sensitive adhesive tape can be produced at low cost. Furthermore, the environmental burden of the pressure-sensitive adhesive tape can be reduced.

The natural rubber contained in the pressure-sensitive adhesive layer of the pressure-sensitive adhesive tape of the present invention is obtained by coagulating a latex collected from Hevea Brasiliensis (Hevea in Euphorbiaceae) which is cultivated mainly in places such as Southeast Asia, the west coast of Equatorial Africa, and the Amazon river basin in Brazil. Examples of the natural rubber include smoked sheet (RSS), pale crepe, blanket crepe, and Hevea crumb. Among these, smoked sheet (RSS) is preferred.

From the viewpoints of enhancing holding power, enhancing paper peelability, and reducing environmental burden, the content of natural rubber in the pressure-sensitive adhesive layer is preferably 5 parts by mass or more, more preferably 30 parts by mass or more, and still more preferably 50 parts by mass or more, relative to 100 parts by mass of the total rubber components. Also, from the viewpoint of ensuring a predetermined content of rubber components other than natural rubber, which will be described below, the content of natural rubber in the pressure-sensitive adhesive layer is preferably 95 parts by mass or less, preferably 85 parts by mass or less, and still more preferably 75 parts by mass or less, relative to 100 parts by mass of the total rubber components.

The molecular weight of natural rubber in the pressure-sensitive adhesive layer is 450,000 or more. If a molecular weight of the natural rubber in the pressure-sensitive adhesive layer is less than 450,000, the holding power of the pressure-sensitive adhesive tape may decrease in some cases. From such a perspective, the molecular weight of the natural rubber in the pressure-sensitive adhesive layer is preferably 600,000 or more, more preferably 700,000 or more, and still more preferably 800,000 or more. The upper limit of the range of the molecular weight of the natural rubber in the pressure-sensitive adhesive layer is usually 1,400,000, though not particularly limited. The molecular weight of the natural rubber in the pressure-sensitive adhesive layer may be measured by the method described in Examples described below.

The natural rubber preferably contains a crosslinkable functional group. Natural rubber is obtained by coagulating and drying natural rubber latex, which is the sap of rubber trees, and is a substance mainly composed of cis-1,4-polyisoprene. The structure of a natural rubber molecule is said to be such that one end of a cis-1,4-isoprene unit is composed of a protein end, the other end is bonded to a phospholipid, and a long-chain fatty acid is further bonded to the phospholipid end. Also, a natural rubber contains 3 to 4 mass% of non-rubber components such as proteins and lipids.

Therefore, the natural rubber can be easily crosslinked and cured by a crosslinking agent described below. Since the pressure-sensitive adhesive composition according to the present invention is cured by crosslinking, the crosslinked product is also called as cured product. From the viewpoint of enhancing the holding power, it is preferable that the natural rubber be crosslinked with an isocyanate-based crosslinking agent.

The pressure-sensitive adhesive layer contains a block copolymer as rubber component other than natural rubber. With the block copolymer contained as rubber component other than natural rubber, the pressure-sensitive adhesive layer has occurrence of pseudo-crosslinking to enhance the immediate processability of a pressure-sensitive adhesive tape. With enhancement in the immediate processability of the pressure-sensitive adhesive tape, it is possible to prevent the pressure-sensitive adhesive from protruding when cutting is performed before or during the crosslinking of the pressure-sensitive adhesive layer.

It is preferable that the block copolymer be a hydrogenated product of a block copolymer having at least a block derived from an aromatic vinyl monomer and a block derived from a conjugated diene monomer.

Examples of the aromatic vinyl monomer include styrene, alpha-methylstyrene, para-methylstyrene, and chlorostyrene. These aromatic vinyl monomers may be used alone or in combination of two or more. Among them, styrene is preferred due to excellence in immediate processability and holding power.

The aromatic vinyl monomer may further have, for example, a structure derived from a compound having a cyclic structure, a compound having a short side chain substituent, or the like, as long as the effect of the present invention is not impaired.

In the block copolymer, the preferred upper limit of the content of the block derived from the aromatic vinyl monomer is 45 mass%, though the content of the block derived from the aromatic vinyl monomer is not particularly limited. With a content of the block derived from the aromatic vinyl monomer of 40 mass% or less, paper peelability is further enhanced. The more preferred upper limit of the aromatic vinyl monomer is 35 mass%, and still more preferred upper limit is 30 mass%.

The preferred lower limit of the content of the block derived from the aromatic vinyl monomer is 5 mass%. When a content of the block derived from the aromatic vinyl monomer is 5 mass% or more, the immediate processability and holding power are further enhanced. The more preferred lower limit of the content of the block derived from the aromatic vinyl monomer is 8 mass%, and the still more preferred lower limit is 10 mass%.

Examples of the conjugated diene monomer include 1,3-butadiene, isoprene, 2,3-dimethyl-1,3-butadiene, 1,3-pentadiene, 2-methyl-1,3-octadiene, 1,3-hexadiene, 1,3-cyclohexadiene, 4,5-diethyl-1,3-octadiene, 3-butyl-1,3-octadiene, myrcene, and chloroprene. These conjugated diene monomers may be used alone or in combination of two or more. Among them, 1,3-butadiene and isoprene are preferred due to having high polymerization reactivity and easy availability on an industrial scale.

In the block copolymer, the content of the block derived from the conjugated diene monomer is not particularly limited as long as the effects of the present invention are exhibited. The lower limit is preferably 55 mass%, more preferably 60 mass%, and the upper limit is preferably 65 mass%, more preferably 70 mass%.

The block copolymer may contain a crosslinkable functional group as long as the effect of the present invention is not impaired.

Examples of the block copolymer include styrene-based block copolymers such as a styrene-isoprene-styrene block copolymer (SIS), a styrene-butadiene-styrene block copolymer (SBS), and a styrene-ethylene-butylene-styrene block copolymer (SEBS). These block copolymers may be used alone or in combination of two or more. Among these block copolymers, a styrene-isoprene-styrene block copolymer (SIS) is preferred from the viewpoint of immediate processability of the pressure-sensitive adhesive tape.

From the viewpoint of immediate processability of the pressure-sensitive adhesive tape, the content of the block copolymer in the pressure-sensitive adhesive layer is preferably 5 parts by mass or more, more preferably 15 parts by mass or more, and still more preferably 25 parts by mass or more, relative to 100 parts by mass of the total rubber components. Also, from the viewpoint of ensuring a predetermined content of natural rubber, the content of the block copolymer in the pressure-sensitive adhesive layer is preferably 95 parts by mass or less, more preferably 70 parts by mass or less, and still more preferably 50 parts by mass or less, relative to 100 parts by mass of the total rubber components.

From the viewpoint of immediate processability of the pressure-sensitive adhesive tape, the content of the block copolymer in the pressure-sensitive adhesive layer is preferably 5 parts by mass or more, more preferably 8 parts by mass or more, and still more preferably 10 parts by mass or more, relative to 100 parts by mass of natural rubber. Also, from the viewpoint of ensuring a predetermined content of natural rubber, the content of the block copolymer in the pressure-sensitive adhesive layer is preferably 1,000 parts by mass or less, more preferably 950 parts by mass or less, and still more preferably 900 parts by mass or less, relative to 100 parts by mass of natural rubber.

The rubber components may further comprise rubber components other than natural rubber and block copolymers, as long as the effects of the present invention are not impaired. Examples of rubber components other than natural rubber and block copolymers include a styrene-butadiene rubber (SBR), a polyisobutylene rubber, and a liquid rubber. The content of the rubber components other than natural rubber and block copolymers is preferably 0 part by mass or more and 10 parts by mass or less, more preferably 0 part by mass or more and 5 parts by mass or less, still more preferably 0 part by mass or more and 2 parts by mass or less, and furthermore preferably 0 part by mass, relative to 100 parts by mass of the total rubber components.

### (Isocyanate-based crosslinking agent)

The pressure-sensitive adhesive layer in the pressure-sensitive adhesive tape of the present invention is crosslinked with an isocyanate-based crosslinking agent. Thereby, the immediate processability can be further enhanced and the holding power of the pressure-sensitive adhesive tape also can be further enhanced.

The isocyanate-based crosslinking agent is not particularly limited as long as it is a compound having two or more isocyanate groups in one molecule, and examples thereof include aromatic isocyanates such as tolylene diisocyanate (TDI), naphthalene diisocyanate, diphenylmethane diisocyanate (MDI), and polymeric MDI, and aliphatic isocyanates such as hexamethylene diisocyanate (HDI), xylylene diisocyanate (XDI), and isophorone diisocyanate. Also, examples of the isocyanate-based crosslinking agent further include trimethylolpropane adducts of the isocyanate compounds, such as a tolylene diisocyanate adduct of trimethylolpropane.

Specific preferred examples of the isocyanate-based crosslinking agents include hexamethylene diisocyanate (HDI) and diphenylmethane diisocyanate (MDI). Among those described above, aliphatic isocyanates are preferred, with hexamethylene diisocyanate (HDI) being more preferred. By using an aliphatic isocyanate such as HDI, gelation can be promoted well, and the crosslinked structure can be made flexible, so that the holding power can be enhanced and the paper peelability at low temperature can be enhanced.

The isocyanate-based crosslinking agents may be used alone or in combination of two or more.

From the viewpoint of the holding power of the pressure-sensitive adhesive tape and the viewpoint of enhancing paper peelability, the amount of crosslinking agent added in the pressure-sensitive adhesive layer is preferably 0.1 parts by mass or more and 8.0 parts by mass or less, more preferably 0.5 parts by mass or more and 6.0 parts by mass or less, and still more preferably 1.0 part by mass or more and 4.0 parts by mass or less, relative to 100 parts by mass of the total rubber components.

### (Tackifier resin)

The pressure-sensitive adhesive layer may contain a tackifier resin from the viewpoint of enhancing pressure-sensitive adhesive strength. Examples of the tackifier resins include a rosin-based tackifier resin, a terpene-based tackifier resin, and a petroleum resin-based tackifier resin. Examples of the rosin-based tackifier resin include a rosin, a hydrogenated rosin, a disproportionated rosin, a polymerized rosin, and an esterified product thereof. Examples of the terpene-based tackifier resin include a terpene resin (α, β-pinene), a terpene phenol resin, an aromatic modified terpene resin, and a hydrogenated terpene resin. Examples of the petroleum resin-based tackifier resin include an aliphatic-based petroleum resins, an aromatic-based petroleum resin, a copolymerized petroleum resin, and a hydrogenated petroleum resin. These tackifier resins may be used alone or in combination of two or more. Among these, a petroleum resin-based tackifier resin is preferred, and an aliphatic-based petroleum resin is more preferred.

From the viewpoint of enhancing the cohesive power and pressure-sensitive adhesive strength of the pressure-sensitive adhesive, the softening point of the tackifier resin may be about 95°C or more. It is preferable that one having a softening point of 120°C or more be included. For example, one having a softening point of 95°C or more and less than 120°C may be used in combination with one having a softening point of 120°C or more and 150°C or less. The softening point may be measured by the ring-and-ball method specified in JIS K 2207.

The content of the tackifier resin in the pressure-sensitive adhesive layer is preferably 10 parts by mass or more and 200 parts by mass or less, more preferably 20 parts by mass or more and 150 parts by mass or less, and still more preferably 40 parts by mass or more and 130 parts by mass or less, relative to 100 parts by mass of the total rubber components.

### (Softener)

The pressure-sensitive adhesive layer may contain a softener. With a softener contained therein, the processability of the pressure-sensitive adhesive constituting the pressure-sensitive adhesive layer can be enhanced.

Examples of the softener include polybutene, polyisobutylene, process oil, and naphthenic oil.

The content of the softener in the pressure-sensitive adhesive layer is preferably 5 parts by mass or more and 100 parts by mass or less, more preferably 10 parts by mass or more and 50 parts by mass or less, and still more preferably 15 parts by mass or more and 30 parts by mass or less, relative to 100 parts by mass of the total rubber components.

### (Fine particles)

The pressure-sensitive adhesive layer may contain fine particles. Examples of the fine particles include inorganic hollow particles such as glass balloons, Shirasu balloons and fly ash balloons; organic hollow particles made of polymethyl methacrylate, acrylonitrile-vinylidene chloride copolymer, polystyrene and phenolic resin; inorganic fine particles such as glass beads, silica beads, calcium carbonate, clay, carbon, titanium oxide, zinc oxide and synthetic mica; and organic fine particles such as ethyl polyacrylate, polyurethane, polyethylene, and polypropylene.

The content of the fine particles in the pressure-sensitive adhesive layer is preferably 10 parts by mass or more and 100 parts by mass or less, more preferably 20 parts by mass or more and 70 parts by mass or less, and still more preferably 30 parts by mass or more and 50 parts by mass or less, relative to 100 parts by mass of the total rubber components.

### (Anti-aging agent)

The pressure-sensitive adhesive layer may contain an anti-aging agent. With an anti-aging agent contained, the pressure-sensitive adhesive layer is protected from deterioration due to oxidation.

Examples of the anti-aging agent include a phenol-based anti-aging agent, an amine-based anti-aging agent, phosphorus-based anti-aging agent, and waxes.

The content of the anti-aging agent in the pressure-sensitive adhesive layer is preferably 0.01 parts by mass or more and 50 parts by mass or less, more preferably 0.1 parts by mass or more and 20 parts by mass or less, and still more preferably 0.5 parts by mass or more and 10 parts by mass or less, relative to 100 parts by mass of the total rubber components.

### (Other components)

The pressure-sensitive adhesive layer may contain various additives that are conventionally used in pressure-sensitive adhesives, including pigments, dyes, polymerization initiators, flame retardants and thickeners, in addition to the components described above.

Since the pressure-sensitive adhesive layer in the pressure-sensitive adhesive tape of the present invention comprises a natural rubber and a block copolymer, the pressure-sensitive adhesive used to form the pressure-sensitive adhesive layer is easily plasticized and fluidized by heat. Therefore, the pressure-sensitive adhesive layer can be formed substantially without a solvent. Thereby, the environmental burden can be further reduced.

In the case where the pressure-sensitive adhesive layer is formed substantially without a solvent, the amount of residual solvent in the pressure-sensitive adhesive layer can be reduced. The amount of residual solvent in the pressure-sensitive adhesive layer is preferably 10 mass ppm or less, more preferably 5 mass ppm or less, and still more preferably 1 mass ppm or less. The lower limit of the amount range of the residual solvent in the pressure-sensitive adhesive layer is, for example, 0 mass ppm, though not particularly limited.

### <Gel fraction>

The gel fraction in the pressure-sensitive adhesive layer in the pressure-sensitive adhesive tape of the present invention is preferably 10% or more. When a gel fraction in the pressure-sensitive adhesive layer is 10% or more, the holding power of the pressure-sensitive adhesive tape can be further enhanced. From such a viewpoint, the gel fraction in the pressure-sensitive adhesive layer is more preferably 15% or more, and still more preferably 20% or more. The upper limit of the gel fraction range in the pressure-sensitive adhesive layer is preferably 50% or less, more preferably 40% or less, though not particularly limited. The gel fraction in the pressure-sensitive adhesive layer can be measured by the method described in Examples described below. The gel fraction in the pressure-sensitive adhesive layer may be adjusted by the type and content of the rubber in the rubber components in the pressure-sensitive adhesive layer, and the type and amount of the crosslinking agent added.

### <Thickness>

The thickness of the pressure-sensitive adhesive layer may be, for example, about 5 µm or more and 200 µm or less, and preferably 10 µm or more and 100 µm or less, though not particularly limited. With a thickness of the pressure-sensitive adhesive layer within the range, the resulting pressure-sensitive adhesive tape can exhibit sufficient pressure-sensitive adhesive strength.

### (Substrate)

The pressure-sensitive adhesive tape of the present invention may further include a substrate, and a pressure-sensitive adhesive layer may be provided on one side of the substrate. Examples of material of a substrate include paper such as kraft paper, Japanese paper, crepe paper, fine paper, coated paper, and synthetic paper; cloth such as cotton cloth, staple cloth, acetate cloth, glass cloth, and polyester cloth; nonwoven fabric such as polyester nonwoven fabric and rayon nonwoven fabric; films such as cellophane film, polyvinyl chloride film, oriented polypropylene film, non-oriented polypropylene film, polyethylene film, polyester film and acetate film; metal foils such as aluminum foil and copper foil; foams such as polyurethane foam, polyethylene foam, vinyl chloride foam, chloroprene foam, natural rubber foam and butyl rubber foam. Among these, a paper substrate made of paper, or an oriented polypropylene film is preferred. The paper is preferably kraft paper.

The thickness of the substrate is preferably 30 µm or more and 400 µm or less, more preferably 35 µm or more and 300 µm or less, and still more preferably 40 µm or more and 200 µm or less, though not particularly limited.

In the case of using a paper substrate such as kraft paper as the material of the substrate, a filler layer may be formed on at least one side of the paper substrate. Although the filler layer may be provided on the surface of the substrate on which the pressure-sensitive adhesive layer is provided, it is preferable that the filler layer be provided on the surface opposite to the surface on which the pressure-sensitive adhesive layer is provided. Then, a release layer to be described below is preferably formed on the filler layer provided on the opposite surface. The filler layer is preferably formed of a polyolefin layer or the like. Examples of the polyolefin resins constituting the filler layer include polyethylene-based resins and polypropylene-based resins, and polyethylene-based resins are more preferred. The filler layer may be formed by laminating a resin such as a polyolefin resin on the surface of the substrate by lamination or the like.

The thickness of the filler layer is preferably 1 µm or more and 20 µm or less, and more preferably 2 µm or more and 15 µm or less, though not particularly limited.

The pressure-sensitive adhesive tape may have a release agent layer provided on the surface of the substrate opposite to the surface on which the pressure-sensitive adhesive layer is provided. Although the release agent layer may be laminated directly on the substrate, it is preferable that the release agent layer be laminated on the substrate through the filler layer described above. By providing the release agent layer, when the pressure-sensitive adhesive tape is wound into a roll to form a rolled body, the pressure-sensitive adhesive layer comes into contact with the release agent layer, so that the pressure-sensitive adhesive tape can be easily unwound from the rolled body. The release agent layer may be formed from a known release agent such as a silicone-based release agent and a long-chain alkyl-based release agent.

### (Biobased content)

The biobased content (content of carbon derived from living organisms) in the pressure-sensitive adhesive layer of the pressure-sensitive adhesive tape of the present invention is preferably 5% or more. In the pressure-sensitive adhesive layer of the pressure-sensitive adhesive tape of the present invention, if a biobased content is 5% or more, petroleum resources can be saved in production of the pressure-sensitive adhesive tape, and carbon dioxide emission associated with production of the pressure-sensitive adhesive tape can be suppressed, so that the environmental burden can be reduced. From such a viewpoint, the biobased content in the pressure-sensitive adhesive layer of the pressure-sensitive adhesive tape of the present invention is more preferably 15% or more, still more preferably 20% or more, and furthermore preferably 25% or more. The upper limit of the range of the biobased content in the pressure-sensitive adhesive layer of the pressure-sensitive adhesive tape of the present invention is preferably 100%, though not particularly limited. The biobased content in the pressure-sensitive adhesive layer of the pressure-sensitive adhesive tape may be measured by the method described in Examples described below. The biobased content in the pressure-sensitive adhesive layer of the pressure-sensitive adhesive tape may be adjusted through the proportion of natural rubber in the pressure-sensitive adhesive layer, or the like.

### (SP pressure-sensitive adhesive strength)

The SP pressure-sensitive adhesive strength of the pressure-sensitive adhesive tape of the present invention is preferably 4 N/24 mm or more. When an SP pressure-sensitive adhesive strength of the pressure-sensitive adhesive tape is 4 N/24 mm or more, the holding power of the pressure-sensitive adhesive tape can be further enhanced. From such a viewpoint, the SP pressure-sensitive adhesive strength of the pressure-sensitive adhesive tape of the present invention is more preferably 5 N/24 mm or more, and still more preferably 6 N/24 mm or more. The upper limit of the range of the SP pressure-sensitive adhesive strength of the pressure-sensitive adhesive tape of the present invention is usually 30 N/24 mm, though not particularly limited. The SP pressure-sensitive adhesive strength of the pressure-sensitive adhesive tape may be measured by the method described in Examples described below. The SP pressure-sensitive adhesive strength of the pressure-sensitive adhesive tape may be adjusted, for example, by the type and amount of isocyanate-based crosslinking agent added, the type and content of rubber, and the type and content of tackifier oil and fat.

### (Ball tack value)

The ball tack value of the pressure-sensitive adhesive tape of the present invention is preferably 8 or more. When a ball tack value of the pressure-sensitive adhesive tape is 8 or more, the pressure-sensitive adhesive tape can immediately exhibit practical adhesive strength when applied to an adherend. From such a viewpoint, the ball tack value of the pressure-sensitive adhesive tape of the present invention is more preferably 9 or more, and still more preferably 10 or more. The upper limit of the range of the ball tack value of the pressure-sensitive adhesive tape of the present invention is usually 30, though not particularly limited. The ball tack value of the pressure-sensitive adhesive tape may be measured by the method described in Examples described below. The ball tack value of the pressure-sensitive adhesive tape may be adjusted, for example, by the type and amount of isocyanate-based crosslinking agent added, the type and content of rubber, and the type and content of tackifier oil and fat.

### (Method for producing pressure-sensitive adhesive tape)

The pressure-sensitive adhesive tape of the present invention may be produced by melt-mixing pressure-sensitive adhesive components such as natural rubber, rubber components other than natural rubber, an isocyanate-based crosslinking agent, and on an as needed basis, a tackifier resin, fine particles, a softener, and an anti-aging agent, at high temperature to obtain a pressure-sensitive adhesive, and then coating the resulting pressure-sensitive adhesive on the surface of a support to form a pressure-sensitive adhesive layer. This method uses no solvent, having advantages of not requiring a drying process, being fast in coating speed without a risk of explosion or fire.

The kneading temperature during melt-mixing may be, for example, 130 to 180°C, and preferably 150 to 170°C, though not particularly limited. Also, the kneading time during melt-mixing may be, for example, 100 to 1,000 seconds, and preferably 100 to 700 seconds, though not particularly limited.

For melt-mixing of the pressure-sensitive adhesive components, for example, a pressurized high-speed kneader, an extruder-type mixer, or a plastomill is used. For coating, for example, a slit die coater or a roll coater is used, though not particularly limited.

The pressure-sensitive adhesive layer is crosslinked with an isocyanate-based crosslinking agent, and the crosslinking of the pressure-sensitive adhesive layer may be performed by a known method. The crosslinking speed varies depending on the storage temperature. The higher the temperature, the faster the crosslinking speed, and the lower the temperature, the slower the crosslinking speed. For example, crosslinking is achieved by leaving the pressure-sensitive adhesive layer at 60°C for about one day, and at 25°C for about seven days.

The resulting pressure-sensitive adhesive tape may be suitably wound to form a rolled body. Also, the pressure-sensitive adhesive tape may be suitably cut to a desired size. For example, in the case where a rolled body is formed, the tape may be wound and then cut from the rolled body. The pressure-sensitive adhesive tape of the present invention has good immediate processability, so that even in the case where the tape is cut before crosslinking, the pressure-sensitive adhesive can be prevented from protruding during or after cutting.

### (Use of pressure-sensitive adhesive tape)

The pressure-sensitive adhesive tape of the present invention contains natural rubber and has excellent immediate processability, so that the production cost of the pressure-sensitive adhesive tape of the present invention is low and the holding power thereof is high. Accordingly, the pressure-sensitive adhesive tape of the present invention is suitable for packaging and office applications, and particularly suitable for a packaging tape. As packaging tape, a kraft tape having a kraft paper substrate and an OPP tape having an OPP substrate are preferred, with kraft tape being particularly preferred.

### Examples

The present invention will be explained in more detail with reference to Examples as follows, though the present invention is not limited to these Examples.

### [Evaluation method]

In Examples and Comparative Examples, the pressure-sensitive adhesive tapes were evaluated by the following evaluation methods.

### (Molecular weight of natural rubber)

The molecular weight of natural rubber was measured by GPC (Gel Permeation Chromatography) analysis, and the peak top molecular weight was taken as the molecular weight of the natural rubber. Specifically, the GPC analysis was performed using ACQUITY APC (manufactured by Waters Corporation) as apparatus and ACQUITY APCXT125-XT45-XT45 (manufactured by Waters Corporation, 3 µm, 4.6×150 mm) as column, polystyrene as GPC reference material when calculating the molecular weight, and tetrahydrofuran as GPC measurement solvent. The molecular weight of the natural rubber was specifically measured as follows. A sample was taken from the pressure-sensitive adhesive layer of the resulting pressure-sensitive adhesive tape and dissolved in toluene to prepare a GPC measurement sample, which was subjected to GPC measurement. The peaks in the results of GPC measurement of the GPC measurement sample were identified by isolating each component by preparative GPC and analyzing the isolated components. The isolated components were identified by GC/MS analysis or IR spectrum analysis, and the molecular weight of natural rubber was determined from the peaks corresponding to natural rubber.

### (Measurement conditions)

Mobile phase: tetrahydrofuran: 1.0 mL/min
Sample concentration: 0.2 mass%
Detectors: differential refractive index (RI) detector, and photodiode array (PDA) detector
GPC reference material: polystyrene (manufactured by Waters Corporation, molecular weight: 266 to 1,800,000)
Column temperature: 40°C

### (Gel fraction of pressure-sensitive adhesive layer)

A test piece of the pressure-sensitive adhesive layer was taken, and the mass A (mg) of the test piece was precisely weighed. Next, toluene was added to the test piece to have a pressure-sensitive adhesive solid content of 6 mass%, and the test piece immersed in toluene was shaken for 24 hours. The mixture was then filtered through a 200-mesh wire net to collect an insoluble matter on the wire net. The insoluble matter was then vacuum-dried, and the mass B (mg) of the insoluble matter was precisely weighed. From the value thus obtained, the gel fraction (mass%) was calculated according to the following formula.
$Gel fraction \left(mass%\right) = 100 \times \left(B/A\right)$

### (Residual solvent amount in pressure-sensitive adhesive layer)

The amount of residual solvent in the pressure-sensitive adhesive layer was measured by gas chromatography (GC-2014, manufactured by Shimadzu Corporation) under the following conditions.
Vial holding temperature: 100°C
Vial warming time: 8 minutes
Injection volume: 1.0 mL
Column: RTX-1 (inner diameter: 0.32 mm, length: 30 m, film thickness: 0.5 µm)
Column temperature: 50°C
Inlet temperature: 150°C
Column inlet pressure: 100 kPa
Column flow rate: 3.4 mL/min
Detector: FID
Sample size: 10 cm×10 cm

### (Biobased content of pressure-sensitive adhesive tape)

The biobased content of the pressure-sensitive adhesive tape was measured in accordance with ASTM 6866.

### (SP pressure-sensitive adhesive strength of pressure-sensitive adhesive tape)

The pressure-sensitive adhesive layer-side of the pressure-sensitive adhesive tape was pressure-bonded to a SUS 304 steel plate by rolling twice with a 2-kg roller under an environment at room temperature (23°C) and a relative humidity of 50%. After leaving it in this environment for 30 minutes, the 180° peel strength at a width of 24 mm was measured with a tensile tester at a tensile speed of 300 mm/min according to the method of JIS Z0237, which was taken as SP pressure-sensitive adhesive strength.

### (Ball tack value of pressure-sensitive adhesive tape)

The ball tack value of the pressure-sensitive adhesive tape was measured and calculated using a ball tack tester (manufactured by Yasuda Seiki Seisakusho, Ltd.) in accordance with JIS Z 0237 under an environment at a temperature of 23°C and a relative humidity of 50%.

### (Paper peeling of pressure-sensitive adhesive tape at low temperature)

The peelability test to evaluate the tack at low temperature was performed as follows. The test pressure-sensitive adhesive tape was cut into 50 mm×70 mm, and placed in a thermostatic chamber at 0°C together with a cardboard as adherend and a 2-kg roller at least 12 hours before the start of the test. Onto the cardboard placed in the thermostatic chamber at 0°C, the test pressure-sensitive adhesive tape was attached without applying force under specific conditions. The 2-kg roller was moved back and forth once thereon to achieve press-bonding. Immediately, peeled-ff was performed at a 90-degree angle at a peeling speed of 100 mm/sec, and the proportion of destruction area (%) of the cardboard at the adhesive part was measured.

### <Evaluation criteria>

A: A significant part of the cardboard is ripped off. (An area proportion of 55% or more of the surface layer of the cardboard is ripped off.)
B: A small part of the cardboard is ripped off. (An area proportion of 45% or more and less than 55% of the surface layer of the cardboard is ripped off.)
C: Not much part of the cardboard is ripped off. (An area proportion of less than 45% of the surface layer of the cardboard is ripped off.)

### (SP holding power of pressure-sensitive adhesive tape)

The pressure-sensitive adhesive layer-side was attached to a polished SUS plate to have an pressure-sensitive adhesion area of 24 mm×24 mm, and the plate was left to stand for 30 minutes under conditions at 23°C and 50% RH. Then, a load of 2-kg was applied under condition at 23°C, and the slippage was measured 24 hours after the 2-kg load was applied, in accordance with the holding power measurement method of JIS Z 0237. In Table 1, "falling" indicates that the slippage was too large and the pressure-sensitive adhesive tape fell off from the polished SUS plate.

### (Liner paper holding power of pressure-sensitive adhesive tape (50°C))

The pressure-sensitive adhesive layer-side was attached to a liner paper (K liner) to have an pressure-sensitive adhesion area of 10 mm×10 mm, and the pressure-sensitive adhesive tape was left to stand for 30 minutes under conditions at 23°C and 50% RH. After that, the pressure-sensitive adhesive tape was stored for 30 minutes under condition at 50°C, and a load of 500 g was applied, and the time until falling from the liner paper was recorded. The presence or absence of the falling was checked every 60 minutes up to 180 minutes.

### (Immediate processability of pressure-sensitive adhesive tape)

The pressure-sensitive adhesive tape wound by the method described in each Example and Comparative Example was cut within 3 hours after winding to obtain a 50 mm×50 m roll sample. Five rolls of the resulting samples were aligned and stacked in an oven at 40°C, and left standing for 1 week under a load of 10 kg applied. After 1 week, the load was removed, and the resistance felt when trying to remove each of the roll of the pressure-sensitive adhesive tape was sensorily evaluated according to the following rating points.

### <Evaluation criteria>

A: A roll can be removed without applying force.
B: A roll can be removed by a small force, with a sticky feel during peeling.
C: A roll can be removed with a strong force, with a strong sticky feel from the side.

### [Examples 1 to 11 and Comparative Examples 1 to 5]

The pressure-sensitive adhesive components blended in the amounts described in Table 1 were fed into a kneading-extrusion tester (product name "Labo Plastomill (registered trademark)" manufactured by Toyo Seiki Seisakusho Ltd.). The pressure-sensitive adhesive components were then melt-kneaded and extrusion-molded under the conditions shown in Table 1, so as to be coated onto paper (kraft paper) or OPP (oriented polypropylene film). Thereby, pressure-sensitive adhesive tapes of Examples and Comparative Examples were prepared. The resulting pressure-sensitive adhesive tapes were left standing for one week under an environment at 23°C and a relative humidity of 50%, and then subjected to each evaluation. The evaluation results are shown in Table 1.

### Table I

**Table 1**

| | | | Unit | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| Composition of pressure-sensitive adhesive | Rubber component | Natural rubber | Part by mass | 65 | 65 | 65 | 65 | 65 | 65 | 90 | 10 | 65 | 65 | 65 | 100 | - | 65 | 65 | 65 |
| | | Block copolymer | Part by mass | 35 | 35 | 35 | 35 | 35 | 35 | 10 | 90 | 35 | 35 | 35 | - | 100 | 35 | 35 | 35 |
| | Isocyanate-based crosslinking agent | HDI | Part by mass | 0.75 | 1.5 | 3.0 | 5.0 | - | - | 1.5 | 1.5 | 1.5 | 1.5 | 1.5 | 1.5 | 1.5 | - | - | 1.5 |
| | | MDI | Part by mass | - | - | - | - | 1.4 | 2.8 | - | - | - | - | - | - | - | - | - | - |
| | Aziridine-based crosslinking agent | | Part by mass | - | - | - | - | - | - | - | - | - | - | - | - | - | 1.5 | - | - |
| | Epoxy-based crosslinking agent | | Part by mass | - | - | - | - | - | - | - | - | - | - | - | - | - | - | 1.5 | - |
| | Tackifier resin | | Part by mass | 100 | 100 | 100 | 100 | 100 | 100 | 100 | 100 | 100 | 100 | 100 | 100 | 100 | 100 | 100 | 100 |
| | Softener | | Part by mass | 25 | 25 | 25 | 25 | 25 | 25 | 25 | 25 | 25 | 25 | 25 | 25 | 25 | 25 | 25 | 25 |
| | Fine particles | | Part by mass | 40 | 40 | 40 | 40 | 40 | 40 | 40 | 40 | 40 | 40 | 40 | 40 | 40 | 40 | 40 | 40 |
| | Anti-aging agent | | Part by mass | 1 | 1 | 1 | 1 | 1 | 1 | 1 | 1 | 1 | 1 | 1 | 1 | 1 | 1 | 1 | 1 |
| Substrate | | | | Paper | Paper | Paper | Paper | Paper | Paper | Paper | Paper | Paper | OPP | Paper | Paper | Paper | Paper | Paper | Paper |
| Production conditions | Kneading temperature | | °C | 160 | 160 | 160 | 160 | 160 | 160 | 160 | 160 | 160 | 160 | 160 | 160 | 160 | 160 | 160 | 160 |
| | Rotational speed | | rpm | 90 | 90 | 90 | 90 | 90 | 90 | 90 | 90 | 90 | 90 | 90 | 90 | 90 | 90 | 90 | 90 |
| | Kneading time | | Second | 500 | 500 | 500 | 500 | 500 | 500 | 500 | 500 | 500 | 500 | 500 | 500 | - | 500 | 500 | 500 |
| Evaluation results | Natural rubber | Molecular weight | - | 830 thousands | 830 thousands | 830 thousands | 830 thousands | 830 thousands | 830 thousands | 830 thousands | 830 thousands | 450 thousands | 830 thousands | 830 thousands | 830 thousands | - | 830 thousands | 830 thousands | 300 thousands |
| | Pressure-sensitive adhesive layer | Thickness | µm | 22 | 21 | 22 | 22 | 23 | 22 | 22 | 22 | 22 | 23 | 21 | 21 | 22 | 22 | 22 | 22 |
| | | Block copolymer content relative to 100 parts by mass of natural rubber | Part by mass | 54 | 54 | 54 | 54 | 54 | 54 | 11 | 900 | 54 | 54 | 54 | - | - | 54 | 54 | 54 |
| | | Gel fraction | % | 10 | 22 | 37 | 48 | 3 | 10 | 35 | 2 | 23 | 25 | 22 | 42 | 0 | 0 | 0 | 18 |
| | | Biobased content | % | 27 | 27 | 27 | 27 | 27 | 27 | 36 | 5 | 27 | 27 | 27 | 40 | 0 | 27 | 27 | 27 |
| | | Residual solvent content | Mass ppm | 0 | 0 | 0 | 0 | 0 | 0 | 0 | 0 | 0 | 0 | 0 | 0 | 0 | 0 | 0 | 0 |
| | Substrate | Thickness | µm | 110 | 110 | 110 | 110 | 110 | 110 | 110 | 110 | 110 | 70 | 150 | 110 | 110 | 110 | 110 | 110 |
| | Tape | SP pressure-sensitive adhesive strength | N/24 mm | 12.4 | 12.3 | 12.8 | 13.5 | 15.4 | 14.8 | 11.8 | 15.2 | 9.3 | 11.0 | 11.5 | 13.4 | 16.3 | 14.8 | 14.7 | 8.2 |
| | | Ball tack value | - | 15 | 15 | 16 | 14 | 14 | 14 | 16 | 11 | 18 | 14 | 14 | 16 | 8.8 | 7 | 7 | 20 |
| | | Paper peeling at low temperature | - | A | A | A | B | B | B | A | B | A | A | A | A | C | B | B | A |
| | | SP holding power | mm | 1.25 | 0.3 | 0.2 | 0 | 0.6 | 0.45 | 0.7 | 0 | 0.8 | 0.2 | 0.4 | 0.5 | 0 | Falling | Falling | Falling |
| | | Liner paper holding power (50°C) | minute | 180< | 180< | 180< | 180< | 180< | 180< | 180< | 180< | 180< | 180< | 180< | 180< | 120 | 60 | 60 | 60 |
| | | Immediate processability | - | A | A | A | A | A | A | A | A | A | A | A | C | A | A | A | B |

### The components in Table 1 are as follows.

Natural rubber: smoked sheet (RSS1), a product after mastication and pelletization. Mooney viscosity was adjusted by mastication time.
Block copolymer: styrene-isoprene-styrene block copolymer (SIS), manufactured by JSR Corporation, product name "SIS5506"
Isocyanate-based crosslinking agent (HDI): hexamethylene diisocyanate (HDI), manufactured by Asahi Kasei Corporation, product name "Duranate TPA-100"
Isocyanate-based crosslinking agent (MDI): diphenylmethane diisocyanate, manufactured by MCC Trading Co., Ltd., product name "diphenylmethane diisocyanate"
Aziridine-based crosslinking agent (HDU): manufactured by Sogo Pharmaceutical Co., Ltd., product name "N,N'-hexamethylene-1,6-bis(1-aziridinecarboxamide)"
Epoxy-based crosslinking agent: manufactured by Mitsubishi Gas Chemical Trading Inc., product name "TETRAD-X"
Tackifier resin: aliphatic-based petroleum resin produced mainly from 1,3-pentadiene extracted from C5 fraction, manufactured by Zeon Corporation, product name "Quinton A-100"
Softener: process oil, manufactured by JXTG Energy Corporation, product name "Kurisef Oil F220"
Fine particles: calcium carbonate, manufactured by Nitto Funka Kogyo K.K., product name "NS#100"
Anti-aging agent: phenol-based anti-aging agent (2,2'-methylenebis-(4-ethyl-6-t-butylphenol)), manufactured by Yoshitomi Pharmaceutical Co., Ltd., product name "Yoshinox 425"

The pressure-sensitive adhesive tapes in Examples 1 to 11 had a pressure-sensitive adhesive layer comprising a natural rubber and a rubber component other than natural rubber, wherein the natural rubber had a molecular weight of 450,000 or more, the rubber component other than natural rubber was a block copolymer, and the pressure-sensitive adhesive layer was crosslinked with an isocyanate-based crosslinking agent, so that they had high holding power and good immediate processability.

The pressure-sensitive adhesive tape in Comparative Example 1 contained no block copolymer, so that it had poor immediate processability.

The pressure-sensitive adhesive tape in Comparative Example 2 contained no natural rubber, so that it had low holding power.

The pressure-sensitive adhesive tapes in Comparative Examples 3 and 4 were not crosslinked with an isocyanate-based crosslinking agent, so that they had poor holding power.

The pressure-sensitive adhesive tape in Comparative Example 5 contained a natural rubber having a molecular weight of less than 450,000, so that it had low holding power and poor immediate processability.

## Claims

1. A pressure-sensitive adhesive tape comprising a pressure-sensitive adhesive layer comprising a natural rubber and a rubber component other than natural rubber, the natural rubber having a molecular weight of 450,000 or more, the rubber component other than natural rubber being a block copolymer, and the pressure-sensitive adhesive layer being crosslinked with an isocyanate-based crosslinking agent.

2. The pressure-sensitive adhesive tape according to claim 1, wherein the block copolymer comprises a styrene-isoprene-styrene block copolymer.

3. The pressure-sensitive adhesive tape according to claim 1, wherein in the pressure-sensitive adhesive layer, a content of the block copolymer is 5 parts by mass or more and 1,000 parts by mass or less relative to 100 parts by mass of natural rubber.

4. The pressure-sensitive adhesive tape according to claim 1, wherein the pressure-sensitive adhesive layer has a gel fraction of 10% or more.

5. The pressure-sensitive adhesive tape according to claim 1, wherein in the pressure-sensitive adhesive layer, an amount of residual solvent is 10 ppm by mass or less.

6. The pressure-sensitive adhesive tape according to claim 1, further comprising a substrate provided on one surface of the pressure-sensitive adhesive layer,
wherein the substrate is a paper substrate or an oriented polypropylene film.

7. The pressure-sensitive adhesive tape according to claim 1, wherein the pressure-sensitive adhesive tape has an SP pressure-sensitive adhesive strength of 4 N/24 mm or more.

8. The pressure-sensitive adhesive tape according to claim 1, wherein the pressure-sensitive adhesive tape has a ball tack value of 8 or more.

9. The pressure-sensitive adhesive tape according to claim 1, wherein
the pressure-sensitive adhesive layer further comprises a tackifier resin, and
the tackifier resin is a petroleum resin-based tackifier resin.
